# EUROPÄISCHE PATENTANMELDUNG

(11) **EP 1 088 735 A2**
(43) Veröffentlichungstag der Anmeldung: **04.04.2001**
(21) Anmeldenummer: 00120468.4
(22) Anmeldetag: 19.09.2000
(51) Int. Cl.: B61K 5/00, B61F 7/00

(54) **Montagevorrichtung für einen spurweitenverstellbaren Treibradsatz**

(30) Priorität: 30.09.1999 DE 19947102
(71) Anmelder: Siemens Krauss-Maffei Lokomotiven GmbH, 80997 München (DE)
(72) Erfinder: Moy, Norbert, Dipl.-Ing., 82362 Weilheim (DE); Muecke, Roland, Dipl.-Ing., 80999 München (DE)
(74) Vertreter: Zedlitz, Peter, Dipl.-Inf.

(57) **Zusammenfassung**

Vorgestellt wird eine Montagevorrichtung für ein spurweitenverstellbares Triebdrehgestell eines Schienenfahrzeugs, mit der erfindungsgemäß mit einfachen Montagemitteln ein sicherer und rascher Zusammenbau der Drehgestellkomponenten dadurch erreicht wird, daß die Montagevorrichtung zwei die Treibradsatzhälften (8.1, 8.2) des Drehgestells jeweils koaxial zueinander ausrichtbar fixierende Halterungen (2.1, 2.2), einen zwischen diesen angeordneten, das Radsatzgetriebe (22) mit seinem Abtriebsteil (24) axial positionierenden Lagerbock (4) sowie eine die Halterungen und den Lagerbock in Axialrichtung des Treibradsatzes (8) relativ zueinander verstellbar führende Montagebasis (6) enthält.

## Beschreibung

Die Erfindung bezieht sich auf eine Montagevorrichtung für einen spurweitenverstellbaren Treibradsatz eines Schienenfahrzeugs, insbesondere eines Spurwechsel-Drehgestells, nach dem Oberbegriff des Patentanspruchs 1.

Bei spurweitenverstellbaren Triebdrehgestellen, wie sie aus der DE-A-195 19 223 bekannt sind, sind die jeweils aus einer Achswelle, einem einzelnen Laufrad und beidseitig des Laufrads angeordneten Radlagern bestehenden Treibradsatzhälften axial verschieblich an einer die Treibradsatzhälften verbindenden Achsbrücke gelagert, welche ihrerseits über die Primärfederung am Drehgestellrahmen abgestützt ist. Der Antrieb erfolgt über ein rahmenfestes Radsatzgetriebe mit einem nach Art einer Kardanhohlwelle begrenzt beweglichen Abtriebsteil, welches mit den inneren Achsstummeln der beiden Radsatzhälften über Bogenverzahnungen axial verschieblich verkuppelt ist, um so die Verschiebebewegungen der Radsatzhälften bei einem Überfahren einer Spurwechseleinrichtung ohne Unterbrechung der antriebsschlüssigen Verbindung zwischen Getriebe und Radsatz aufzunehmen. Derartige Triebdrehgestelle besitzen zwar eine geringe ungefederte Masse, beim Zusammenbau müssen jedoch die Radsatzhälften und das Antriebsteil des Getriebes getrennt voneinander, also noch ohne Achsbrücke und ohne Drehgestellrahmen, axial fluchtend ausgerichtet und dann mit hoher Präzision zusammengeschoben werden, um Beschädigungen vor allem an den empfindlichen Bogenzahnkupplungen zu vermeiden, was angesichts der starken Kippneigung und des hohen Eigengewichts der Radsatzhälften und des Radsatzgetriebes mit ganz erheblichen Montageschwierigkeiten verbunden ist.

Aufgabe der Erfindung ist es, eine Montagevorrichtung für einen spurweitenverstellbaren Treibradsatz der eingangs genannten Art zu schaffen, mit der eine einfache und rasche Montage der einzelnen, axial zueinander verschieblichen Laufwerkskomponenten ermöglicht wird.

Diese Aufgabe wird erfindungsgemäß durch die im Patentanspruch 1 gekennzeichnete Montagevorrichtung gelöst.

Mit der erfindungsgemäßen Vorrichtung wird auf konstruktiv einfache Weise eine sichere, montagegerechte Abstützung der Radsatzhälften und des Radsatzgetriebes gewährleistet, derart, daß diese jeweils einzeln in einer stabilen Lage, gleichzeitig aber zueinander fluchtend ausrichtbar und axial verschieblich an den Halterungen bzw. dem Lagerbock fixiert werden, so daß sie ohne aufwendige Hilfsmittel beschädigungsfrei und mühelos, auch von Hand, zusammengebaut werden können.

Um eine zwängungsfreie formschlüssige Verkuppelung beim Zusammenschieben der Radsatzhälften mit dem Abtriebsteil des Radsatzgetriebes sicherzustellen, müssen sich diese relativ zueinander in einer definierten Drehlage befinden, was sich zwar zumindest für eine Radsatzhälfte durch entsprechende Drehlagenänderung des Abtriebsteils erreichen läßt, gemäß Anspruch 2 zweckmäßigerweise aber wesentlich einfacher dadurch bewirkt wird, daß die beiden Treibradsatzhälften an den Halterungen jeweils unabhängig voneinander drehpositionierbar abgestützt sind.

In besonders bevorzugter Weise sind die Treibradsatzhälften gemäß Anspruch 3 an den Halterungen und das Radsatzgetriebe am Lagerbock relativ zueinander höhenverstellbar gelagert, wodurch ein problemloser Zusammenbau nicht nur bei der Erstmontage, sondern auch bei späteren Reparatur- oder Wartungsarbeiten mit im Durchmesser reduzierten Laufrädern garantiert wird.

Aus Gründen einer weiteren Montagevereinfachung sind die Treibradsatzhälften gemäß Anspruch 4 vorzugsweise mit jeweils vormontierten Radlagern an den Halterungen fixiert.

Zur Verringerung der ungefederten Laufwerksmassen ist das Radsatzgetriebe, wie bereits erwähnt und nach Anspruch 5 bevorzugt, gehäusefest mit einer gefederten Fahrzeugkomponente, also insbesondere dem Drehgestellrahmen, verbunden und enthält als Abtriebsteil eine kardanisch angetriebene, über Bogenzahnkupplungen verschieblich mit den Treibradsatzhälften verkoppelte Hohlwelle.

Nach Anspruch 6 schließlich sind die Treibradsatzhälften zweckmäßigerweise in dem an der Montagevorrichtung fixierten Zustand und nach der Verkoppelung mit dem Radsatzgetriebe mittels einer starren Achsbrücke begrenzt axial verschieblich, im übrigen aber bewegungsfest miteinander verbunden. Demzufolge bleiben die einzelnen Laufwerkskomponenten an der Montagevorrichtung abgestutzt, bis sie miteinander zu einer stabilen Baueinheit verbunden sind, also zumindest bis nach Befestigung der Achsbrücke und bei einem Triebdrehgestell mit primärgefedertem Radsatzgetriebe bis zum vollständigen Zusammenbau des Drehgestells einschließlich der Primärfederung und des Drehgestellrahmens.

Die Erfindung wird nunmehr anhand eines Ausführungsbeispiels in Verbindung mit den Zeichnungen näher erläutert. Diese zeigen in stark schematisierter Darstellung eine Montagevorrichtung nach der Erfindung beim schrittweisen Zusammenbau eines Triebdrehgestells, und zwar:

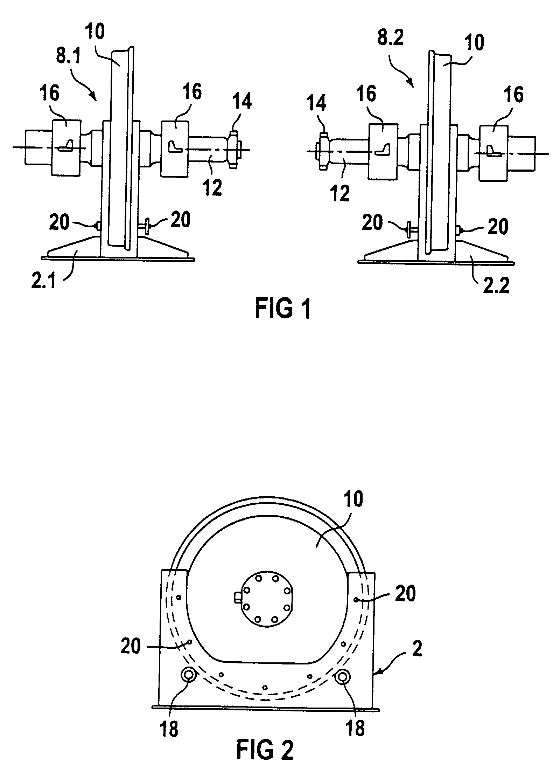

- Fig. 1 und 2: die Halterungen der Montagevorrichtung zusammen mit den daran fixierten Treibradsatzhälften in der Vorder- (Fig. 1) bzw. Seitenansicht (Fig. 2);
- Fig. 3: die Montagevorrichtung nach dem Zusammenbau der Treibradsatzhälften mit dem Radsatzgetriebe; und
- Fig. 4: die Montagevorrichtung nach Befestigung der Achsbrücke.

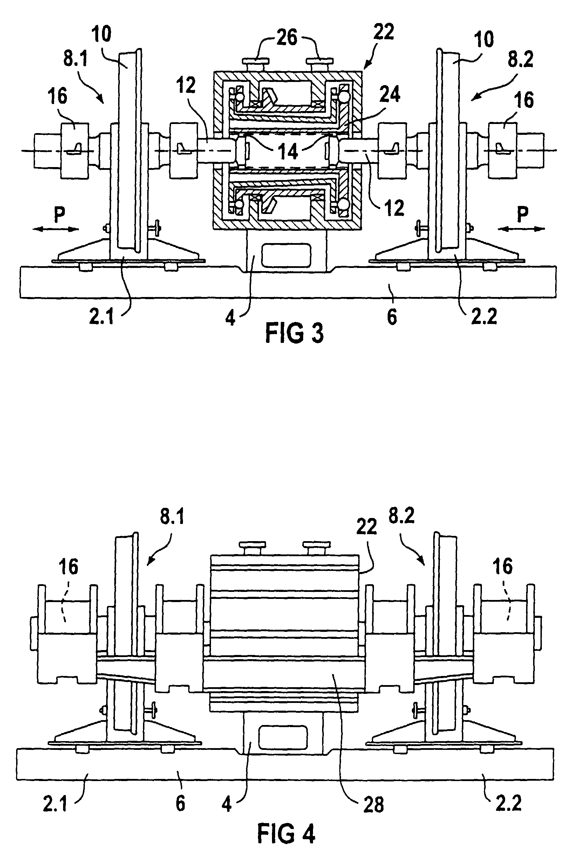

Die in den Fig. gezeigte Montagevorrichtung enthält als Hauptbestandteile zwei Halterungen 2.1 und 2.2 sowie einen Lagerbock 4 (Fig. 3 und 4) und eine Montagebasis 6.

An den Halterungen 2 werden die beiden Treibradsatzhälften 8.1 und 8.2, bestehend aus einem Einzellaufrad 10, einem Achsstummel 12 mit einer endseitigen Bogenverzahnung 14 und beidseitig des Laufrades 10 vormontierten Radlagern 16, getrennt voneinander fixiert, wobei die Radsatzhälften 8 über die Laufräder 10 jeweils drehpositionierbar an Auflagerollen 18 der Halterungen 2 abgestützt sind. Durch entsprechende Wahl des Rollendurchmessers läßt sich die Höhenlage der Radsatzachse variieren, etwa um bei späteren Wartungs- oder Reparaturarbeiten, die eine Demontage der Radsatzhälften 8 erfordern, verschleißbedingte Durchmesserveränderungen der Laufräder 10 auszugleichen. Ferner sind die Radsatzhälften 8 begrenzt kippbeweglich an den Halterungen 2 gelagert und werden mit Hilfe von seitlich an den Laufrädern 10 angreifenden Stellschrauben 20 exakt koaxial zueinander ausgerichtet und dann in dieser Lage und einer vorgegebenen Drehposition an den Halterungen 2 festgespannt.

Die Halterungen 2 sind zusammen mit den an diesen einjustierten Radsatzhälften 8 in Axialrichtung linear verschieblich an der Montagebasis 6 geführt, wie dies in Fig. 3 durch die Doppelpfeile P angedeutet ist. Im auseinandergeschobenen Zustand der Halterungen 2 wird das Radsatzgetriebe 22 zwischen diese eingeführt und an dem Lagerbock 4 der Montagebasis 6 befestigt. Das Getriebe 22 ist von üblicher Bauart und enthält als Abtriebsteil eine kardanisch, also allseitig begrenzt beweglich angetriebene Hohlwelle 24, die mit einer zu den Bogenverzahnungen 14 der Radsatzhälften 8 korrespondierenden Innenverzahnung versehen ist. Zur späteren Befestigung am Drehgestellrahmen sind am Getriebegehäuse entsprechende Anschlußflansche 26 ausgebildet.

In dem so fixierten, montagebereiten Zustand der Laufwerkskomponenten 8, 22 werden die Halterungen 2 zusammengeschoben, so daß die Achsstummel 12 mit ihren Bogenverzahnungen 14 in einer vorgegebenen Drehlage in die Innenverzahnung der Hohlwelle 24 eingreifen und dadurch die Laufräder 10 miteinander und mit der Hohlwelle 24 drehfest verkoppelt werden (Fig. 3). Anschließend wird die Achsbrücke 28 (Fig. 4) angebaut, an der die Radsatzhälften 8 mit den Radlagern 16 unabhängig voneinander axial verschieblich gelagert und in unterschiedlichen Spurweiteneinstellungen arretierbar sind. In gleicher Weise wird ein zweiter Treibradsatz einschließlich eines Radsatzgetriebes auf einer weiteren, identischen Montagevorrichtung zusammengebaut. Die Treibradsätze verbleiben auf der zugeordneten Montagevorrichtung, bis die Primärfederung eingebaut und die Radsatzgetriebe am Drehgestellrahmen (nicht gezeigt) befestigt sind und somit die einzelnen Laufwerkskomponenten eine stabile Baueinheit bilden, woraufhin die Montagevorrichtungen entfernt werden und das Drehgestell komplettiert wird.

## Patentansprüche

1. Montagevorrichtung für einen spurweitenverstellbaren Treibradsatz eines Schienenfahrzeugs, insbesondere eines Spurwechsel-Drehgestells, bestehend aus zwei mit dem Abtriebsteil des Radsatzgetriebes axial verschieblich gekoppelten Treibradsatzhälften,
**dadurch gekennzeichnet,**
daß die Montagevorrichtung enthält:
- zwei die Treibradsatzhälften (8.1, 8.2) jeweils koaxial zueinander ausrichtbar fixierende Halterungen (2.1, 2.2),
- einen zwischen diesen angeordneten, das Radsatzgetriebe (22) mit dem Abtriebsteil (24) axial positionierenden Lagerbock (4) und
- eine die Halterungen und den Lagerbock in Axialrichtung des Treibradsatzes relativ zueinander verstellbar führende Montagebasis (6).

2. Montagevorrichtung nach Anspruch 1,
**dadurch gekennzeichnet,**
daß die Treibradsatzhälften (8.1, 8.2) unabhängig voneinander drehpositionierbar an den Halterungen (2.1, 2.2) abgestützt sind.

3. Montagevorrichtung nach Anspruch 1 oder 2,
**dadurch gekennzeichnet,**
daß die Treibradsatzhälften (8.1, 8.2) an den Halterungen (2.1, 2.2) und das Radsatzgetriebe (22) am Lagerbock (4) relativ zueinander höhenverstellbar abgestützt sind.

4. Montagevorrichtung nach einem der vorhergehenden Ansprüche,
**dadurch gekennzeichnet,**
daß die Treibradsatzhälften (8.1, 8.2) mit jeweils vormontierten Radlagern (16) an den Halterungen (2.1, 2.2) fixiert sind.

5. Montagevorrichtung nach einem der vorhergehenden Ansprüche,
**dadurch gekennzeichnet,**
daß das Radsatzgetriebe (22) gehäusefest mit einer gefederten Fahrzeugkomponente verbunden ist und als Abtriebsteil (24) eine kardanisch angetriebene, über Verzahnungen (14) verschieblich mit den Treibradsatzhälften (8.1, 8.2) verkoppelte Hohlwelle enthält.

6. Montagevorrichtung nach einem der vorhergehenden Ansprüche,
**dadurch gekennzeichnet,**
daß die Treibradsatzhälften (8.1, 8.2) in dem an der Montagevorrichtung fixierten Zustand und nach der Verkoppelung mit dem Radsatzgetriebe (22) mittels einer starren Achsbrücke (28) begrenzt axial verschieblich, im übrigen aber bewegungsfest miteinander verbunden sind.
